(19) Europäisches Patentamt / European Patent Office / Office européen des brevets

(11) **EP 3 101 984 A1**

(12) **EUROPEAN PATENT APPLICATION**
published in accordance with Art. 153(4) EPC

(43) Date of publication:
07.12.2016 Bulletin 2016/49

(51) Int Cl.:
*H04W 74/08* (2009.01)

(21) Application number: 14881023.7

(22) Date of filing: 23.07.2014

(86) International application number:
PCT/CN2014/082840

(87) International publication number:
WO 2015/113384 (06.08.2015 Gazette 2015/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.01.2014 CN 201410042545

(71) Applicant: ZTE Corporation
Shenzhen, Guangdong 518057 (CN)

(72) Inventors:
• LIU, Kun
  Shenzhen
  Guangdong 518057 (CN)
• DAI, Bo
  Shenzhen
  Guangdong 518057 (CN)

• LU, Zhaohua
  Shenzhen
  Guangdong 518057 (CN)
• XIA, Shuqiang
  Shenzhen
  Guangdong 518057 (CN)
• FANG, Huiying
  Shenzhen
  Guangdong 518057 (CN)
• SHI, Jing
  Shenzhen
  Guangdong 518057 (CN)
• LI, Xincai
  Shenzhen
  Guangdong 518057 (CN)

(74) Representative: Lavoix
Bayerstrasse 83
80335 München (DE)

(54) **INFORMATION TRANSMISSION AND ACQUISITION METHOD, ACCESS METHOD, NODE, SYSTEM AND MEDIUM**

(57) Methods for transmitting and acquiring configuration information, an access method, a node and a system are provided, and relate to a random access technology in the field of wireless communications. The method for transmitting configuration information of a random access channel includes that: configuration information of a random access channel is transmitted, the configuration information of the random access channel including configuration information of a first type of levels. A computer storage medium is also provided.

Fig. 1

| | |
|---|---|
| Configuration information of a random access channel is received, the configuration information of the random access channel including configuration information of a first type of levels | S110 |
| A pre-stored information table of the first type is searched for a first type of information according to the configuration information of the first type of levels and a predefined rule | S120 |

EP 3 101 984 A1

**Description**

**TECHNICAL FIELD**

The present disclosure relates to a random access technology in the field of wireless communications, and in particular to methods for transmitting and acquiring configuration information, an access method, a communication node, a system and a computer storage medium.

**BACKGROUND**

Machine Type Communication (MTC) User Equipment (UE), also called Machine To Machine (M2M) communication UE, is a main application form of present Internet of things. Low power consumption and low cost are important guarantees for its large-scale application. At present, M2M equipment in the market is mainly based on a Global System of Mobile communication (GSM). In recent years, more and more mobile service providers select Long Term Evolution/Long Term Evolution-Advance (LTE/LTE-A) as a direction of evolution of a broadband wireless communication system in the future because of improvement in spectral efficiency of LTE/LTE-A. Various kinds of LTE/LTE-A-based M2M data services will be more attractive. Only when cost of LTE-M2M equipment is lower than that of GSM-based MTC UE, M2M service may really be transferred from a GSM to an LTE system.

At present, alternative methods for reducing cost of MTC UE mainly include: reducing the number of receiving antennae of UE, reducing a baseband processing bandwidth of the UE, reducing a peak rate supported by the UE, adopting a half-duplex mode and the like. However, cost reduction means performance reduction, however, for an LTE/LTE-A system, it is not allowed to lower cell coverage, therefore, some measures have to be taken for MTC UE with low configuration cost to meet the coverage performance of existing LTE UE. In addition, MTC UE may be located at a position such as a basement and a wall corner, and its scenario is severer than that of ordinary LTE UE. In order to compensate for coverage reduction caused by penetration loss, performance of some MTC UE needs to be improved more, so that uplink and downlink coverage of the part of MTC UE has to be improved. How to ensure access quality of a user is the first problem to be considered, and an improved design is needed for a Physical Random Access Channel (PRACH) of an LTE/LTE-A system to ensure normal access of MTC UE to the system.

Totally 5 types of transmitting formats (also called preamble formats) of random access signalling, i.e. preamble formats 0-4, may be configured in an existing LTE/LTE-A system, and an Evolved Node B (eNB) selects one of the 5 preamble formats, and sends configuration information of the selected preamble format to UE through a System Information Block (SIB). After learning about a PRACH preamble format supported by a current system, the UE generates random access signalling (also called message1, abbreviated as Msg1) according to a currently configured random access sequence and the specific selected preamble format. The UE sends the random access signalling on a PRACH.

The eNB in the LTE/LTE-A system detects the random access signalling sent by the UE, and may send a Random Access Response (RAR) message (also called message2, abbreviated as Msg2) to the UE once detecting the random access signalling sent by the UE.

Position information of a Physical Resource Block (PRB) occupied by the RAR message in the LTE/LTE-A system is included in Downlink Control Information (DCI), and is sent through a Physical Downlink Control Channel (PDCCH). In addition, the DCI further includes a 16-bit Cyclic Redundancy Check (CRC), and the CRC is further scrambled by adopting a 16-bit Random Access Radio Network Temporary Identity (RA-RNTI), a scrambling manner being:

$$c_k = (b_k + a_k) \bmod 2 \quad k = 0,1,...,15 \,,$$

where $b_k$ is the (k+1)th bit in the CRC; $a_k$ is the (k+1)th bit in the RA-RNTI; and $c_k$ is the (k+1)th bit generated by scrambling.

The UE receives the RAR message and obtains uplink time synchronization and an uplink resource, but may not determine that the RAR message is sent to the UE itself rather than other UE at this moment because there is a possibility that different UEs send the same random access sequence using the same time-frequency resource and they may receive the same RAR through the same RA-RNTI. Moreover, the UE cannot know whether there is other UE using the same resource for random access. Therefore, the UE resolves such a random access conflict through subsequent message3 (abbreviated as Msg3) and message4 (abbreviated as Msg4).

Msg3 is the first message transmitted on a Physical Uplink Shared Channel (PUSCH) by adopting a Hybrid Automatic Repeat Request (HARQ) mechanism based on uplink scheduling. In an initial random access process, a Radio Resource Control (RRC) connection request is transmitted through Msg3, different UEs may obtain the same uplink resource and simultaneously send Msg3 when receiving the same RAR message, and in order to distinguish different UEs, a specific Identity (ID) of a UE may be contained in Msg3 to distinguish different UEs. Under an initial access condition, the ID may be an S-Temporary Mobile Subscriber Identity (S-TMSI) (if existing) of the UE or a 40-byte value which is randomly generated.

The UE starts a contention resolution timer (the timer is restarted every time when Msg3 is retransmitted) immediately when finishing transmitting Msg3, and the UE is required to monitor a contention resolution message (Msg4) returned to it by the eNB.

In order to simultaneously ensure low power consumption of MTC UE and improve a capability in random access to a network, improved random access is disclosed in a conventional art, but an improved random access process is higher in signalling consumption, so that it is urgent to present a random access manner capable of reducing signalling consumption and further optimizing the MTC UE.

## SUMMARY

In view of this, the embodiments of the present disclosure provide methods for transmitting and acquiring configuration information, an access method, a node, a system and a computer storage medium, which may effectively reduce signalling overhead in a random access process.

In order to achieve the purpose, the technical solutions of the embodiments of the present disclosure are implemented as follows.

According to a first aspect of the embodiments of the present disclosure, a method for transmitting configuration information of a random access channel may include that:

configuration information of a random access channel is transmitted, the configuration information of the random access channel including configuration information of a first type of levels.

Preferably, the first type of levels may include a Coverage Improvement Level (CIL) and/or a physical channel repeat level.

Preferably, a physical channel corresponding to the physical channel repeat level may include at least one of:

a PRACH, a Physical Broadcast Channel (PBCH), a PDCCH, an Enhanced PDCCH (EPDCCH), a Physical Downlink Shared Channel (PDSCH), a Physical Uplink Control Channel (PUCCH) and a PUSCH.

Preferably, the physical channel repeat level may include a repeat level of at least one of: a Master Information Block (MIB), SIB, DCI, a downlink transmission block, an uplink transmission block, Msg1, an RAR message, Msg3 and Msg4 born on the physical channel.

Preferably, the configuration information of the random access channel may be configured in the SIB or the DCI by a first type of node or management equipment of the first type of node.

Preferably,
the SIB may be sent through a PDSCH; and
the DCI may be sent through a PDCCH or an EPDCCH.

Preferably, the configuration information of the first type of levels may include at least one of: index information of the first type of levels configured by the first type of node, bitmap information, repeat times information of the physical channel corresponding to the first type of levels, predefined level amount of the first type of levels, configured level amount of the first type of levels, a configured highest level of the first type of levels and a configured lowest level of the first type of levels.

Preferably, the configuration information of the first type of levels may have a mapping relationship with a first type of information, and the mapping relationship may be configured in a second type of node by communication system equipment or sent to the second type of node by the first type of node.

Preferably, the first type of information may include at least one of:

the number of the levels of the first type,

configured number N1 of the first type of levels, wherein N1 is a positive integer;

index information of the N1 levels in the first type of levels;

predefined number N2 of the first type of levels, wherein N2 is a positive integer;

a value range of received signal quality of a predefined reference signal corresponding to the first type of levels;

3

value ranges of Coverage Improvement Target (CIT) values corresponding to the first type of levels, wherein the value ranges may refer to maximum values of the values, or minimum values of the values, or specific values, or value intervals;

a retransmission level of the physical channel corresponding to the first type of levels; and

a value range of repeat times of the physical channel corresponding to the first type of levels, wherein the value ranges may be specific values or value intervals.

Preferably, the repeat times of the physical channel corresponding to the first type of levels may be a predefined value, wherein the predefined value is a positive integer.

Preferably, the N1 levels of the first type may be extracted from N2 predefined levels of the first type, and N2 may be a positive integer larger than or equal to N1.

Preferably, the configuration information of the first type of levels may further include solution indication information about repeat times of the physical channel,
wherein the solution indication information about repeat times of the physical channel may be configured to indicate to select one solution from multiple predefined solutions about the value range of repeat times of the physical channel corresponding to the first type of levels.

Preferably, the predefined reference signal may include at least one of:

a Cell-Specific Reference Signal (CRS), a Demodulation Reference Signal (DM-RS), a Primary Synchronization Signal (PSS), a Secondary Synchronization Signal (SSS) and a signal sent by a PBCH.

Preferably, the received signal quality of the predefined reference signal may include at least one of:

Reference Signal Receive Power (RSRP), Reference Signal Receive Quality (RSRQ), a Received Signal Strength Indicator (RSSI), a received signal to noise ratio of the reference signal, a path loss value between the second type of node and the first type of node and retransmission times of the predefined reference signal under a condition of successful reception of the predefined reference signal.

Preferably, the value range of the received signal quality of the predefined reference signal may include at least one of:

a value range of a measured value of the received signal quality of the predefined reference signal; and

a value range of a difference between the measured value of the received signal quality of the predefined reference signal and a reference value of the received signal quality of the predefined reference signal or a value range of an absolute value of the difference,

wherein the value ranges may refer to maximum values of the values, or minimum values of the values, or specific values, or value intervals.

Preferably, the reference value of the received signal quality of the predefined reference signal may be sent to the second type of node by the first type of node.

Preferably, the reference value of the received signal quality of the predefined reference signal may be configured in the configuration information of the random access channel.

Preferably, the value intervals of the received signal quality of the predefined reference signal corresponding to different levels in the first type of levels may correspond to a same range;
or,
ranges corresponding to the value intervals of the received signal quality of the predefined reference signal corresponding to different levels in the first type of levels may be decreased along with increase of levels in the first type of levels, wherein the ranges corresponding to the value intervals of the received signal quality of the predefined reference signal corresponding to different levels in the first type of levels may be configured in the SIB by the first type of node.

Preferably, the value ranges, corresponding to different levels in the first type of levels, of the received signal quality of the predefined reference signal may not be intersected or be partially intersected.

Preferably, when the received signal quality of the predefined reference signal measured by the second type of node is in an intersection of value ranges corresponding to different levels, the second type of node may select a corresponding level of the first type of levels randomly or according to a predefined principle.

Preferably, the value ranges of the CIT values corresponding to different levels in the first type of levels may not be intersected or be partially intersected.

Preferably, when a CIT value measured by the second type of node is in an intersection of value ranges corresponding to different levels, the second type of node may select a corresponding level of the first type of levels randomly or according to a predefined principle.

Preferably, the value intervals of the CIT values corresponding to different levels in the first type of levels may correspond to the same value range;

or

sizes of value ranges corresponding to the value intervals of the CIT values corresponding to different levels in the first type of levels may be decreased along with increase of the levels in the first type of levels,

wherein the ranges corresponding to the value intervals of the CIT values corresponding to different levels in the first type of levels may be configured in the SIB by the first type of node.

Preferably, the step that the configuration information of the random access channel is transmitted may be include:

the configuration information of the random access channel is periodically transmitted,
or

the configuration information of the random access channel is transmitted under triggering of a predefined condition.

Preferably, the configuration information of the random access channel may further include random access channel resources allocated to the second type of node.

Preferably, the random access channel resources allocated to the second type of node may include at least one of: time-domain resources, frequency-domain resources, and available random access sequences.

Preferably, the method may further include that: a multiplexing manner for random access channel resources allocated by each of the levels of the first type is determined at least according to the number of the levels of the first type and the random access channel resources allocated to the second type of node.

Preferably, when random access channel resources allocated by each of different levels in the first type of levels are distinguished by available random access sequences, the number of random access sequences allocated by each of the levels of the first type may be directly proportional to the number of the nodes of the second type corresponding to each level in the first type of levels.

Preferably, when random access channel resources allocated by each of different levels in the first type of levels are distinguished by the available random access sequences, the number of random access sequences allocated by each of different levels in the first type of levels may be the same, and the allocated random access sequences may be different.

Preferably, the number of random access sequences allocated by different levels in the first type of levels may be increased along with increase of the levels in the first type of levels.

Preferably, when random access channel resources allocated by each level in the first type of levels are distinguished by available random access sequences, the number of random access sequences allocated by each level in the first type of levels may be configured by the first type of node.

Preferably, when random access channel resources allocated by each level in the first type of levels are distinguished by available random access sequences, the number of random access sequences allocated by each level in the first type of levels may be configured by the first type of node.

Preferably, the configuration information of the random access channel may further include: random access channel resources allocated to the second type of node, the random access channel resources being allocated according to a predefined resource allocation strategy;

the predefined resource allocation strategy may include a first strategy and a second strategy;

the first strategy may be one of that: the number of the available random access sequences is smaller than a first predefined value; the number of the available random access sequences is larger than a second predefined value; and the number of the available random access sequences is larger than the first predefined value and smaller than the second predefined value; the first predefined value may be smaller than the second predefined value;

the second strategy may be one of that: the number of the available random access sequences is larger than a third predefined value; the number of the available random access sequences is smaller than a fourth predefined value; and the number of the available random access sequences is smaller than the third predefined value and larger than the fourth predefined value; the third predefined value may be larger than the second predefined value;

when the first strategy is met, each level in the first type of levels may multiplex the same frequency-domain resource in a Time Division Multiplexing (TDM) manner or multiplex the same time-domain resource in a Frequency Division Multiplexing (FDM) manner; and

when the second strategy is met, the random access channel resources allocated by each level in the first type of levels may occupy the same time-domain resources and/or frequency-domain resources, and the random access channel resources allocated by each level in the first type of levels may include different random access sequences,

wherein the first predefined value, the second predefined value, the third predefined value and the fourth predefined value may be configured and transmitted to the second type of node by communication system equipment, or may be configured and sent to the second type of node by the first type of node.

Preferably, a proportion of the numbers of random access sequences allocated by two levels in the first type of levels may be consistent with a preset proportional relationship $A^{m(i)}: A^{m(n)}$,

where i and n are indexes of the two levels in the first type of levels; and $m(i)$ and $m(n)$ are power exponents corresponding to the two levels, corresponding to i and n, in the first type of levels, and A is a base number.

Preferably, $A^{m(i)}$ and $A^{m(n)}$ may be configured by the communication system equipment according to the sizes of the value range of the received signal quality of the predefined reference signal corresponding to each level in the first type of levels and/or sizes of value ranges of CIT values corresponding to each level in the first type of levels.

According to a second aspect of the embodiments of the present disclosure, a method for acquiring configuration information of a random access channel may include that:

configuration information of a random access channel is received, the configuration information of the random access channel including configuration information of a first type of levels; and

a pre-stored information table of the first type is searched for a first type of information according to the configuration information of the first type of levels and a predefined rule.

According to a third aspect of the embodiments of the present disclosure, a random access method may include that:

a first type of node transmits configuration information of a random access channel, the configuration information of the random access channel including configuration information of a first type of levels;

a second type of node receives the configuration information of the random access channel;

the second type of node searches a pre-stored information table of the first type for a first type of information according to the configuration information of the first type of levels and a predefined rule; and

the second type of node randomly accesses a radio network according to the first type of information.

According to a fourth aspect of the embodiments of the present disclosure, a communication node is provided, which may be a first type of node, the first type of node including:

a first transmitting unit, configured to transmit configuration information of a random access channel, the configuration information of the random access channel including configuration information of a first type of levels.

According to a fifth aspect of the embodiments of the present disclosure, a communication node is provided, which may be a second type of node, the second type of node including:

a receiving unit, configured to receive configuration information of a random access channel, the configuration information of the random access channel including configuration information of a first type of levels; and

a query unit, configured to search a pre-stored information table of the first type for a first type of information according to the configuration information of the first type of levels and a predefined rule.

According to a sixth aspect of the embodiments of the present disclosure, a communication system is provided, which may include:

a first type of node, configured to transmit configuration information of a random access channel, the configuration information of the random access channel including configuration information of a first type of levels; and

a second type of node, configured to receive the configuration information of the random access channel, search for a first type of information in a pre-stored information table of the first type according to the configuration information of the first type of levels and a predefined rule and randomly access a radio network according to the first type of information.

According to a seventh aspect of the embodiments of the present disclosure, a computer storage medium is provided, in which computer-executable instructions may be stored, the computer-executable instruction being configured to execute at least one of the methods mentioned in the first aspect to third aspect of the embodiments of the present disclosure.

According to the methods for transmitting and acquiring configuration information, an access method, communication nodes, a system and a computer storage medium of the embodiments of the present disclosure, the first type of information which is pre-stored may be queried according to the configuration information of the first type of levels, thereby finishing transmission and acquisition of the first type of information; then a random access process is implemented according to the first type of information which is found. Compared with transmission of the first type of information, transmission of a query basis, i.e. the first type of levels, of the first type of information obviously involves transmission of less information, so that signalling overhead is reduced.

**BRIEF DESCRIPTION OF THE DRAWINGS**

Fig. 1 is a flowchart of a method for acquring configuration information of random access signalling according to embodiment 2 of the present disclosure;

Fig. 2 is a flowchart of a random access method according to embodiment 2 of the present disclosure;

Fig. 3 is a structure diagram of a communication node according to embodiment 5 of the present disclosure; and

Fig. 4 is a structure diagram of a communication system according to embodiment 6 of the present disclosure.

**DETAILED DESCRIPTION**

Preferred embodiments of the present disclosure will be described below with reference to the drawings in detail, and it should be understood that the preferred embodiments described below are only adopted to describe and explain the present disclosure and not intended to limit the present disclosure.

Embodiment 1

The embodiment provides a method for transmitting configuration information of a random access channel, which includes that:

configuration information of a random access channel is transmitted, the configuration information of the random access channel including configuration information of a first type of levels (or levels of a first type),

wherein a first type of information (or, information of a first type) is acquired according to the configuration information of the first type of levels and a predefined rule. The first type of information may be divided into a plurality of levels, and a first type of information corresponding to one or more levels of the first type of information may be found according to the configuration information of the first type of levels.

The first type of information may be information to be used in a random access process, such as random access signalling.

The first type of levels include at least one of: a CIL and a physical channel repeat level.

The physical channel repeat level includes a repeat level of at least one of followings: Master Information Block (MIB), System Information Block (SIB), Downlink Control Information (DCI), downlink transmission block, uplink transmission block, Msg1, RAR message, Msg3 and Msg4, which are born on a physical channel.

The first type of information corresponding to the physical channel repeat level includes a physical channel type and a repeat times (i.e., the number of repeat times) of each physical channel. The physical channel corresponding to the repeat transmission level of the physical channel may specifically include at least one of:

a PRACH, a PBCH, a PDCCH, an EPDCCH, a PDSCH, a PUCCH and a PUSCH.

The configuration information of the first type of levels is configured by communication system equipment, such as a first type of node or management equipment of the first type of node (a high-layer network node of the first type of node, or a controller of the first type of node), and is configured in an SIB or DCI, or is pre-stored in equipment of the first type of node and of a second type of node. The first type of node may be any one of a macro eNB, a micro eNB, a pico eNB, a home eNB, a low-power node and a relay station. The SIB is information sent by the first type of node through broadcast for communication.

The second type of node may be one or more pieces of UE or UE groups, such as MTC UE and/or Coverage Improvement (CI) MTC UE.

The SIB is sent through a PDSCH; and

the DCI is sent through a PDCCH or an EPDCCH.

The configuration information of the first type of levels is a basis for query about the first type of information, and may specifically include any one of index information of the first type of levels, repeat times information of the physical channel corresponding to the first type of levels, bitmap information, the level amount of the first type of levels, a highest level in the first type of levels and a lowest level in the first type of levels in multiple combination manners of the predefined level amount of the first type of levels, the configured level amount of the first type of levels, a configured highest level of the first type of levels, a configured lowest level of the first type of levels, and the like. Three preferred manners are provided as follows.

Manner 1: the configuration information of the first type of levels includes index information, such as an index number.

Manner 2: the configuration information of the first type of levels includes bitmap information, consisting of a sequence formed by a plurality of bits 0 or 1; in a specific implementation process, a sequence length of the bitmap information and a combination manner of 0 or 0 and 1 in the sequence may be mapped with at least a part of information of the first type of information, and then the first type of information is acquired according to a mapping relationship; and the bitmap information may also be considered as an index or a basis for query in an information table of the first type of information. In this manner, the number of the levels of the first type may also be considered as a basis for searching for the first type of information. The number of the levels of the first type is the total number of levels or grades included in the first type of levels.

Manner 3: the configuration information of the first type of levels includes the number of the levels of the first type. During specific implementation, the number of the levels of the first type may be combined with the highest level in the first type of levels and/or the lowest level in the first type of levels to serve as a basis for querying the first type of information. Specifically how to determine the highest level or lowest level in the first type of levels may be implemented by sequencing each level in the first type of levels according to a specific predetermined manner; for example, the first level is specified to be the highest level or lowest level, or the first level may be not set, or other multiple specific manners may be adopted, which will not be elaborated one by one herein. Here is a specific example of a method for acquiring the first type of information according to the number of first levels: the first type of information is stored by A preset information tables, and information table A1 corresponds to a levels, any two information tables correspond to different levels, and then the specific one among the A information tables may be determined according to the amount information of the levels. For example, if the first type of the levels is a, it is determined that the first type of information is queried from information table A1. Information of a specific level in information table A1 may be acquired according to predefined setting or acquired randomly. Multiple specific manners may be adopted, which will not be elaborated one by one herein.

Obviously, the configuration information of the first type of levels has a mapping relationship with the first type of information, and the mapping relationship is sent to the second type of node by management equipment of a communication system or the first type of node. The communication system is a communication network and equipment thereof including a transmitting node and a receiving node. In the embodiment, the communication system includes the first type of node, the second type of node and management network elements of the first type of node and/or the second type of node.

The first type of information includes at least one of:

the number N1 of the levels of the first type, wherein N1 is a positive integer, and for example, if the first type of levels includes 10 levels, N1 is equal to 10;

index information of the N1 levels of the first type, wherein each level in the first type of levels may correspond to one piece of index information, so that query may be conveniently made according to the first type of levels;

a value range of received signal quality of a predefined reference signal corresponding to the first type of levels;

a value range of CIT values corresponding to the first type of levels, wherein the value ranges refer to maximum values, minimum values or value intervals of the values, and the value intervals include the maximum values, the minimum values of the values, specific values, and values between the maximum values and the minimum values;

a retransmission level of the physical channel corresponding to the first type of levels; and

a value range of repeat times of the physical channel corresponding to the first type of levels, wherein the value ranges are specific values or value intervals.

Preferably, the repeat times of the physical channel corresponding to the first type of levels may be a predefined value, wherein the predefined value is a positive integer.

The N1 levels of the first type are from N2 predefined levels of the first type, and N2 is a positive integer larger than or equal to N1.

The configuration information of the first type of levels may further include solution indication information about repeat times of the physical channel, wherein the solution indication information about repeat times of the physical channel is configured to indicate to select one of multiple predefined solutions about the value range of repeat times of the physical channel corresponding to the first type of levels.

The predefined reference signal includes at least one of:

a Cell-Specific Reference Signal (CRS), a Demodulation Reference Signal (DM-RS), a Primary Synchronization Signal (PSS), a Secondary Synchronization Signal (SSS), and a signal sent by a PBCH.

The received signal quality of the predefined reference signal includes at least one of:

Reference Signal Receive Power (RSRP), Reference Signal Receive Quality (RSRQ), a Received Signal Strength Indicator (RSSI), a received signal to noise ratio of the reference signal, a path loss value between the second type of node and the first type of node, and retransmission times of the predefined reference signal under a condition of successful reception of the predefined reference signal.

The value range of the received signal quality of the predefined reference signal includes at least one of:

a value range of a measured value of the received signal quality of the predefined reference signal; and

a value range of a difference between the measured value of the received signal quality of the predefined reference signal and a reference value of the received signal quality of the predefined reference signal, or a value range of an absolute value of the difference,

wherein the value range refers to a maximum value, a minimum value, a specific value or a value interval.

The reference value of the received signal quality of the predefined reference signal is sent to the second type of node by the first type of node; and the reference value of the received signal quality of the predefined reference signal is configured in the configuration information of the random access channel.

The value ranges of the received signal quality of the predefined reference signal corresponding to different levels in the first type of levels are not intersected or are partially intersected, and the value ranges of the received signal quality of the predefined reference signal corresponding to different levels in the first type of levels are not completely the same.

When the second type of node measures that the received signal quality of the predefined reference signal is in an intersection of value ranges corresponding to two different levels, the second type of node selects a corresponding level from the first type of levels randomly or according to a predefined principle. For example, when the first type of levels include level B1 and level B2, wherein in a condition that received signal quality of a predefined reference signal corresponding to level B1 and that corresponding to level B2 have an intersection and the received signal quality measured by the second type of node is in the intersection, the second type of node may randomly select a first type of information corresponding to level B1 or level B2 as information to be acquired for random access. In addition, selection may also be performed according to the predefined principle, for example, a lower level is preferably selected for querying the first type of information. In addition, the predefined principle is a principle of selection according to power consumption of the second type of node, for example, a level which may be supported by the power consumption of the second type of node is selected.

There are at least two mapping relationships of range sizes corresponding to the value intervals of the received signal quality of the predefined reference signal corresponding to different levels in the first type of levels.

First: the value intervals of the received signal quality of the predefined reference signal corresponding to different levels in the first type of levels correspond to the same range. Specifically, if level a is higher than level b, value intervals corresponding to level a and level b respectively may have the same range size, for example, both the value intervals include 10 values, but specific values corresponding to level a and level b may be the same or different.

Second: sizes of ranges corresponding to the value intervals of the received signal quality of the predefined reference signal corresponding to different levels in the first type of levels are decreased along with increase of the levels in the first type of levels. For example, if level a is higher than level b, a range corresponding to the value interval of the received signal quality of the predefined reference signal corresponding to level a is, for example, p1, a range corresponding to the value interval of the received signal quality of the predefined reference signal corresponding to level b is, for example, p2, then p1 is smaller than p2. However, a specific value corresponding to level a may be same as or different from a specific value corresponding to level b.

Preferably, the value ranges of the CIT values corresponding to different levels in the first type of levels are not intersected or are partially intersected. When a CIT value measured by the second type of node is in an intersection of value ranges corresponding to different levels, the second type of node selects a corresponding level from the first type of levels randomly or according to a predefined principle. The value intervals of the CIT values corresponding to different levels in the first type of levels correspond to the same range, or sizes of ranges corresponding to the value intervals of the CIT values corresponding to different levels in the first type of levels are decreased along with increase of the levels in the first type of levels; and the ranges corresponding to the value intervals of the CIT values corresponding to different levels in the first type of levels are configured in the SIB by the first type of node.

The step that the configuration information of the random access channel is transmitted is implemented as follows:

the configuration information of the random access channel is periodically transmitted, or

the configuration information of the random access channel is transmitted under triggering according to a predefined condition.

The predefined condition may be that the transmission of the configuration information is triggered according to an instruction transmitted by network management equipment or a request submitted by UE or the like.

The configuration information of the random access channel further includes configuration information of PRACH resources, wherein the PRACH resources are configured for random access of the second type of node.

The configuration information of the random access channel further includes random access channel resources allocated to the second type of node.

The random access channel resources allocated to the second type of node include at least one of followings: time-domain resources, frequency-domain resources and available random access sequences.

A multiplexing manner for random access channel resources allocated by each of the levels of the first type is determined according to the number of the levels of the first type and the random access channel resources allocated to the second type of node.

The method of the embodiment may further schedule the random access channel resources according to a predefined resource allocation strategy;

the predefined resource allocation strategy includes a first strategy and a second strategy;

the first strategy is one of that: the number of available random access sequences is smaller than a first predefined value; the number of the available random access sequences is larger than a second predefined value; and the number of the available random access sequences is larger than the first predefined value and smaller than the second predefined value; the first predefined value may be smaller than the second predefined value;

the second strategy is one of that: the number of the available random access sequences is larger than a third predefined value; that the number of the available random access sequences is smaller than a fourth predefined value; and that the number of the available random access sequences is smaller than the third predefined value and larger than the fourth predefined value; the third predefined value may be larger than the second predefined value;

when the first strategy is met, the multiplexing manner for the random access channel resources allocated by each level in the first type of levels include: FDM and/or TDM; and

when the second strategy is met, the random access channel resources allocated by each level in the first type of levels occupy the same time-domain resources and/or frequency-domain resources, and the random access channel resources allocated by each level in the first type of levels include different random access sequences,

wherein the first predefined value, the second predefined value, the third predefined value and the fourth predefined value are configured and transmitted to the second type of node by the network management equipment, or are configured and sent to the second type of node by the first type of node.

When random access channel resources allocated by each of different levels in the first type of levels are distinguished by available random access sequences, the same number of random access sequences are allocated by each of different levels in the first type of levels.

In addition, when the random access channel resources allocated by each of the levels of the first type are distinguished by the available random access sequences, the number of random access sequences allocated by each of the levels of the first type may further be configured.

The number of random access sequences allocated by different levels in the first type of levels is increased along with increase of levels in the first type of levels, namely, the number of random access sequences is directly proportional to the levels in the first type of levels. A proportion of the numbers of random access sequences allocated by two levels in the first type of levels satisfies a preset proportional relationship $A^{m(i)}: A^{m(n)}$, where i and n are indexes of the two levels in the first type of levels; and $m(i)$ and $m(n)$ are power exponents corresponding to the two levels, corresponding to the indexes i and n, in the first type of levels, and A is a base number.

A relationship among the numbers of random access sequences corresponding to the N1 levels of the first type may be $A^{m(1)}: A^{m(2)}: A^{m(3)}:......A^{m(N1)}$, where $A^{m(1)}$ corresponds to the first level in the first type of levels; and $A^{m(N1)}$ corresponds to the (N1)th level in the first type of levels.

$A^{m(i)}$ and $A^{m(n)}$ are configured by the communication system equipment according to the size of the value range of the received signal quality of the predefined reference signal corresponding to each level in the first type of levels and/or the size of the value range of a CIT value corresponding to each level in the first type of levels.

In the embodiment, the communication system equipment may be the first type of node, the second type of node or any node in the communication system; and the communication system equipment may correspond to specific physical equipment, or may also be a logical network element which, together with another function application, uses the same equipment.

Embodiment 2

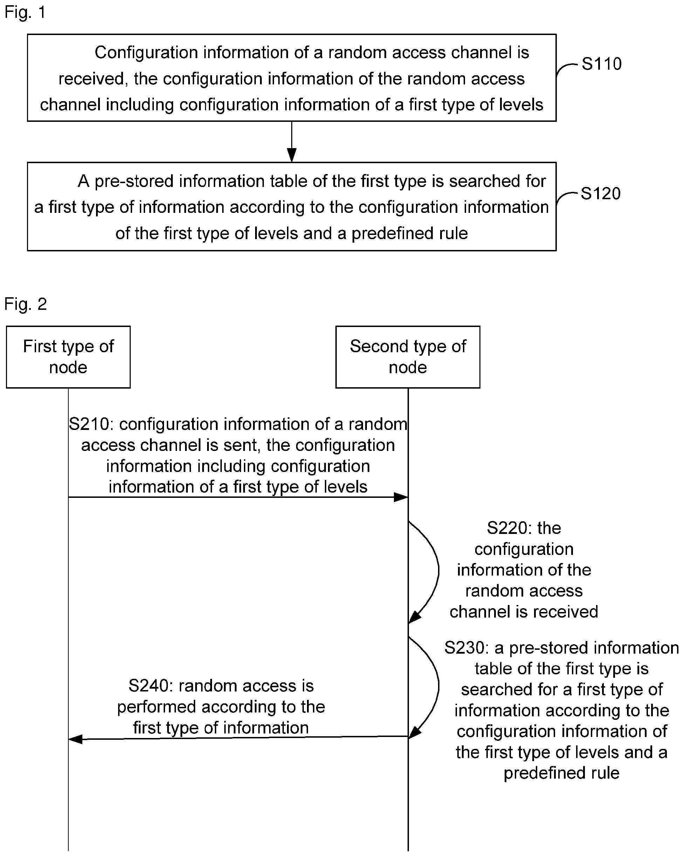

As shown in Fig. 1, the embodiment provides a method for acquiring random access signalling, which includes:

Step S110: configuration information of a random access channel is received, the configuration information of the random access channel including configuration information of a first type of levels; and

Step S120: a pre-stored information table of the first type is searched for a first type of information according to the configuration information of the first type of levels and a predefined rule.

Equipment which executes Step S110 and Step S120 may be a second type of node, and the second type of node may include one or more pieces of UE or UE groups, such as MTC UE or CI MTC UE.

The first type of information has been pre-stored in a storage medium of the second type of node; and a specific structure of the first type of information is described in embodiment 1.

Compared with a conventional acquisition method for random signalling, the random access signalling acquisition method of the embodiment has the advantage that information to be used in a random access process is acquired by receiving the first type of levels and performing query in the pre-stored first type of information according to the first type of levels, thereby simplifying signalling interaction and lowering signalling overhead.

Embodiment 3

As shown in Fig. 2, the embodiment provides a random access method, which includes:

Step S210: a first type of node transmits configuration information of a random access channel, the configuration information of the random access channel including configuration information of a first type of levels;

Step S220: a second type of node receives the configuration information of the random access channel;

Step S230: the second type of node searches a pre-stored information table of the first type for a first type of information according to the configuration information of the first type of levels and a predefined rule; and

Step S240: the second type of node randomly accesses a radio network according to the first type of information.

The first type of node is usually a network-side eNB or the like, and may specifically be any one of a macro eNB, a micro eNB, a pico eNB, a femto eNB, a low-power node and a relay station.

The second type of node is usually one or more mobile terminals; and the mobile terminal may be MTC UE or CI MTC UE.

The composition of the first type of levels and the first type of information may refer to embodiment 1.

Generally, access to the radio network according to the first type of information in Step S240 refers to access to the first type of node, such as a macro eNB or a small eNB, in the radio network.

Compared with an existing random access method, the random access method of the embodiment has the advantage that not all information which may be used in a random access process is sent by the first type of node and the first type of node only sends a basis for querying or acquiring the first type of information, so that information interaction in the random access process is reduced.

Embodiment 4

The embodiment provides a communication node, which is a first type of node, the first type of node including:

a first transmitting unit, configured to transmit configuration information of a random access channel, the configuration information of the random access channel including configuration information of a first type of levels,

wherein a first type of information is acquired according to the configuration information of the first type of levels and a predefined rule.

A specific structure of the first transmitting unit may be a transmitting antenna or a transmitting antenna matrix, and a hardware support to implementation of the method for transmitting configuration information of a random access channel of embodiment 1 is provided by this embodiment, and any technical solution in embodiment 1 may be implemented.

In a specific implementation process, the first type of communication node further includes a storage medium connected with the first transmitting unit; and the storage medium is configured to store the configuration information of the random access channel.

Embodiment 5

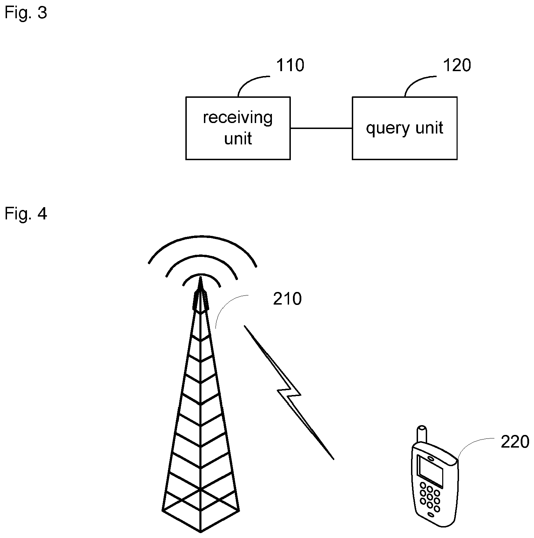

As shown in Fig. 3, the embodiment provides a communication node, which is a second type of node, the second type of node including:

a receiving unit 110, configured to receive configuration information of a random access channel, the configuration information of the random access channel including configuration information of a first type of levels; and

a query unit 120, configured to search for a first type of information in a pre-stored information table of the first type according to the first type of levels and a predefined rule.

A specific structure of the receiving unit 110 may be a receiving antenna; a physical structure of the query unit 120 may include a processor; and the processor runs a program or software, and the first type of information which is pre-stored may be queried in a storage medium of the communication node. The receiving unit 110, the query unit 120 and the storage medium are connected through a bus, and may perform data transmission in the communication node.

A hardware support to implementation of the random access signalling acquisition method of embodiment 2 is provided by the communication node of the embodiment, and any technical solution in embodiment 1 may be implemented.

Embodiment 6

As shown in Fig. 4, the embodiment provides a communication system, which includes:

a first type of node 210, configured to transmit configuration information of a random access channel, the configuration information of the random access channel including configuration information of a first type of levels; and

a second type of node 220, configured to receive the configuration information of the random access channel, search for a first type of information in a pre-stored information table of the first type according to the configuration information of the first type of levels and a predefined rule and randomly access a radio network according to the first type of information.

The first type of node may be any one of a macro eNB, a micro eNB, a pico eNB, a femto eNB, a low-power node and a relay station.

The second type of node may be one or more pieces of UE or UE groups, such as MTC UE and/or CI MTC UE.

The communication system of the embodiment provides a hardware support for the random access method of embodiment 3, and the advantage of reducing signalling overhead of the UE in a random access process is also achieved. Specific composition of the first type of levels and the first type of information may refer to embodiment 1.

An embodiment of the present disclosure further provides a computer storage medium, in which computer-executable instructions are stored, the computer-executable instructions being configured to execute at least one of the methods in embodiment 1 to embodiment 3, for example, to execute the methods shown in Fig. 1 and Fig. 2.

The computer storage medium may be a storage medium such as a Digital Video Disk (DVD), a compact disc, a mobile hard disk or a U disk, and is preferably a non-transient storage medium.

The specific application examples will be provided below with reference to the embodiments of the present disclosure.

Example 1

There exist MTC UEs in an LTE system, and the MTC UEs are divided into normal MTC UEs and CI MTC UEs. At most three CILs are configured in the LTE system, and Table 1 shows a mapping relationship among a CIL amount, a CIT, and repeat times of a PRACH preamble.

Table 1

| Index | CIL amount | CIT | PRACH preamble repeat times |
|---|---|---|---|
| 0 | 1 | CIL0: 0dB<CIT<=15dB | CIL0: repeat times $N_{CIL0,1Levels}^{preamble,Type0}$ |
| 1 | 1 | CIL0: 0dB<CIT<=15dB | CIL0: repeat times $N_{CIL0,1Levels}^{preamble,Type1}$ |
| 02 | 2 | CIL0: 0dB<CIT<=7.5dB | CIL0: repeat times $N_{CIL0,2Levels}^{preamble,Type0}$ |
| | | CI L1: 7.5dB<CIT<=15dB | CIL1: repeat times $N_{CIL1,2Levels}^{preamble,Type0}$ |
| 13 | 2 | CIL0: 0dB<CIT<=7.5dB | CIL0: repeat times $N_{CIL0,2Levels}^{preamble,Type1}$ |
| | | CI L1: 7.5dB<CIT<=15dB | CIL1: repeat times $N_{CIL1,2Levels}^{preamble,Type1}$ |
| 24 | 3 | CIL0: 0dB<CIT<=5dB | CIL0: repeat times $N_{CIL0,3Levels}^{preamble,Type0}$ |
| | | CI L1: 5dB<CIT<=10dB | CIL1. repeat times $N_{CIL1,3Levels}^{preamble,Type0}$ |
| | | CIL2: 10dB<CIT<=15dB | CIL2: repeat times $N_{CIL2,3Levels}^{preamble,Type0}$ |
| 35 | 3 | CIL0: 0dB<CIT<=5dB | CIL0: repeat times $N_{CIL0,3Levels}^{preamble,Type1}$ |
| | | CI L1: 5dB<CIT<=10dB | CIL1: repeat times $N_{CIL1,3Levels}^{preamble,Type1}$ |
| | | CIL2: 10dB<CIT<=15dB | CIL2: repeat times $N_{CIL2,3Levels}^{preamble,Type1}$ |

An evolved Node B (eNB) sends configuration information of a random access channel through an SIB. The configuration information includes an Index with a value range of 0~5. In the example, a value of the index included in the configuration information is 5, and a CI MTC UE learns about the above index information (Index 5), and may query Table 1 to know that: when the CIL amount is 3, a CIT corresponding to CIL0 is 0dB<CIT<=5dB, a CIT corresponding to CIL1 is 5dB<CIT<=10dB, a CIT corresponding to CIL2 is 10dB<CIT<=15dB, repeat times of a PRACH preamble corresponding to CIL0 is $N_{CIL0,3Levels}^{preamble,Type1}$ , repeat times of a PRACH preamble corresponding to CIL1 is $N_{CIL1,3Levels}^{preamble,Type1}$

and repeat times of a PRACH preamble corresponding to CIL2 is $N_{CIL2,3Levels}^{preamble,Type1}$ .

The CILs in the example correspond to the first type of levels in embodiments 1 to 6; the configuration information of the first type of levels may correspond to the index information; and the first type of information corresponds to the information in Table 1.

Example 2

There exist MTC UEs in an LTE system, and the MTC UEs are divided into normal MTC UEs and CI MTC UEs. At most three CILs are configured in the LTE system, and Table 2 shows a mapping relationship among a CIL amount, a CIT, repeat times of a PRACH preamble and repeat times of a PBCH.

Table 2

| Index | CIL amount | CIT | PRACH preamble repeat times | PBCH repeat times |
|---|---|---|---|---|
| 0 | 1 | CIL0: 0dB<CIT<=15dB | CIL0: repeat times $N_{CIL0,1Levels}^{preamble,Type0}$ | CIL0: repeat times $N_{CIL0,1Levels}^{PBCH,Type0}$ |
| 1 | 1 | CIL0: 0dB<CIT<=15dB | CIL0: repeat times $N_{CIL0,1Levels}^{preamble,Type1}$ | CIL0: repeat times $N_{CIL0,1Levels}^{PBCH,Type1}$ |
| 2 | 2 | CIL0: 0dB<CIT<=7.5dB CIL1: 7.5dB<CIT<=15dB | CIL0: repeat times $N_{CIL0,2Levels}^{preamble,Type0}$ CIL1: repeat times $N_{CIL1,2Levels}^{preamble,Type0}$ | CIL0: repeat times $N_{CIL0,2Levels}^{PBCH,Type0}$ CIL1: repeat times $N_{CIL1,2Levels}^{PBCH,Type0}$ |
| 3 | 2 | CIL0: 0dB<CIT<=7.5dB CIL1: 7.5dB<CIT<=15dB | CIL0: repeat times $N_{CIL0,2Levels}^{preamble,Type1}$ CIL1: repeat times $N_{CIL1,2Levels}^{preamble,Type1}$ | CIL0: repeat times $N_{CIL0,2Levels}^{PBCH,Type1}$ CIL1: repeat times $N_{CIL1,2Levels}^{PBCH,Type1}$ |
| 4 | 3 | CIL0: 0dB<CIT<=5dB CIL1: 5dB<CIT<=10dB CIL2: 10dB<CIT<=15dB | CIL0: repeat times $N_{CIL0,3Levels}^{preamble,Type0}$ CIL1: repeat times $N_{CIL1,3Levels}^{preamble,Type0}$ CIL2: repeat times $N_{CIL2,3Levels}^{preamble,Type0}$ | CIL0: repeat times $N_{CIL0,3Levels}^{PBCH,Type0}$ CIL1: repeat times $N_{CIL1,3Levels}^{PBCH,Type0}$ CIL2: repeat times $N_{CIL2,3Levels}^{PBCH,Type0}$ |
| 5 | 3 | CIL0: 0dB<CIT<=5dB CIL1: 5dB<CIT<=10dB CIL2: 10dB<CIT<=15dB | CIL0: repeat times $N_{CIL0,3Levels}^{preamble,Type1}$ CIL1: repeat times $N_{CIL1,3Levels}^{preamble,Type1}$ CIL2: repeat times $N_{CIL2,3Levels}^{preamble,Type1}$ | CIL0: repeat times $N_{CIL0,3Levels}^{PBCH,Type1}$ CIL1: repeat times $N_{CIL1,3Levels}^{PBCH,Type1}$ CIL2: repeat times $N_{CIL2,3Levels}^{PBCH,Type1}$ |

An eNB sends configuration information of a random access channel in an SIB, wherein the configuration information includes a piece of index information (Index) with a value range of 0~5. In the example, a value of the index information included in the configuration information is 5, and a CI MTC UE learns about the index information (Index 5), and may query Table 2 to know that: when the CIL amount is 3, a CIT corresponding to CIL0 is 0dB<CIT<=5dB, a CIT corresponding to CIL1 is 5dB<CIT<=10dB, a CIT corresponding to CIL2 is 10dB<CIT<=15dB, repeat times of a PRACH preamble corresponding to CIL0 is $N_{CIL0,3Levels}^{preamble,Type1}$ , repeat times of a PRACH preamble corresponding to CIL1 is $N_{CIL1,3Levels}^{preamble,Type1}$ , repeat times of a PRACH preamble corresponding to CIL2 is $N_{CIL2,3Levels}^{preamble,Type1}$ , repeat times of a PBCH corresponding to CIL0 is $N_{CIL0,3Levels}^{PBCH,Type1}$ , repeat times of a PBCH corresponding to CIL1 is $N_{CIL1,3Levels}^{PBCH,Type1}$ and repeat times of a PBCH corresponding to CIL2 is $N_{CIL2,3Levels}^{PBCH,Type1}$ .

The first type of levels correspond to the CILs; the configuration information of the first type of levels is the index information; and the first type of information is the information in Table 2.

Example 3

There exist MTC UEs in an LTE system, and the MTC UEs are divided into normal MTC UEs and CI MTC UEs. Two to three CILs are configured in the LTE system, and Table 3 shows a mapping relationship among a CIL amount, a CIT, repeat times of a PRACH preamble and repeat times of a PBCH.

Table 3

| Index | CIL amount | CIT | PRACH preamble repeat times | PBCH repeat times |
|---|---|---|---|---|
| 0 | 2 | CIL0: 0dB<CIT<=7.5dB | CIL0: repeat times $N_{CIL0,2Levels}^{preamble,Type0}$ | CIL0: repeat times 1 |
| | | CIL1: 7.5dB<CIT<=15dB | CIL1: repeat times $N_{CIL1,2Levels}^{preamble,Type0}$ | CIL1: repeat times $N_{CIL1,2Levels}^{PBCH,Type0}$ |
| 1 | 2 | CIL0: 0dB<CIT<=7.5dB | CIL0: repeat times $N_{CIL0,2Levels}^{preamble,Type1}$ | CIL0: repeat times 1 |
| | | CIL1: 7.5dB<CIT<=15dB | CIL1: repeat times $N_{CIL1,2Levels}^{preamble,Type1}$ | CIL1: repeat times $N_{CIL1,2Levels}^{PBCH,Type1}$ |
| 2 | 3 | CIL0: 0dB<CIT<=5dB | CIL0: repeat times $N_{CIL0,3Levels}^{preamble,Type0}$ | CIL0: repeat times 1 |
| | | CIL1: 5dB<CIT<=10dB | CIL1: repeat times $N_{CIL1,3Levels}^{preamble,Type0}$ | CIL1: repeat times $N_{CIL1,3Levels}^{PBCH,Type0}$ |
| | | CIL2: 10dB<CIT<=15dB | CIL2: repeat times $N_{CIL2,3Levels}^{preamble,Type0}$ | CIL2: repeat times $N_{CIL2,3Levels}^{PBCH,Type0}$ |
| 3 | 3 | CIL0: 0dB<CIT<=5dB | CIL0: repeat times $N_{CIL0,3Levels}^{preamble,Type1}$ | CIL0: repeat times 1 |
| | | CIL1: 5dB<CIT<=10dB | CIL1: repeat times $N_{CIL1,3Levels}^{preamble,Type1}$ | CIL1: repeat times $N_{CIL1,3Levels}^{PBCH,Type1}$ |

(continued)

| | | CIL2: | | |
| --- | --- | --- | --- | --- |
| | | 10dB<CIT<=15dB | CIL2: repeat times $N_{CIL2,3Levels}^{preamble,Type1}$ | CIL2: repeat times $N_{CIL2,3Levels}^{PBCH,Type1}$ |

An eNB sends configuration information of a random access channel in an SIB. A value range of index information in Table 3 is 0~3. In the example, a value of the index information included in the configuration information is 3, and a CI MTC UE learns about that the index information is Index=3, and may query the table (Table 1) to know that: when the CIL amount is 3, a CIT corresponding to CIL0 is 0dB<CIT<=5dB, a CIT corresponding to CIL1 is 5dB<CIT<=10dB, a CIT corresponding to CIL2 is 10dB<CIT<=15dB, repeat times of a PRACH preamble corresponding to CIL0 is $N_{CIL0,3Levels}^{preamble,Type1}$, repeat times of a PRACH preamble corresponding to CIL1 is $N_{CIL1,3Levels}^{preamble,Type1}$, repeat times of a PRACH preamble corresponding to CIL2 is $N_{CIL2,3Levels}^{preamble,Type1}$, repeat times of a PBCH corresponding to CIL0 is 1 (indicating that a PBCH may be not retransmitted), repeat times of a PBCH corresponding to CIL1 is $N_{CIL1,3Levels}^{PBCH,Type1}$ and repeat times of a PBCH corresponding to CIL2 is $N_{CIL2,3Levels}^{PBCH,Type1}$.

Here, the first type of levels correspond to the CILs; the configuration information of the first type of levels is the index information of the CILs; and the first type of information is the information in Table 3.

Example 4

There exist MTC UEs in an LTE system, and the MTC UEs are divided into normal MTC UEs and CI MTC UEs. Five CILs are configured in the system, and as shown in Table 4, each CIL corresponds to a Max CIT (M-CIT) value.

Table 4

| CIL index | M-CIT | PRACH preamble repeat times |
| --- | --- | --- |
| 0 | 3dB | $N_{CIL0}^{preamble}$ |
| 1 | 6dB | $N_{CIL1}^{preamble}$ |
| 2 | 9dB | $N_{CIL2}^{preamble}$ |
| 3 | 12dB | $N_{CIL3}^{preamble}$ |
| 4 | 15dB | $N_{CIL4}^{preamble}$ |

In the example, three CILs are configured in the communication system, and an eNB sends configuration information of a random access channel in an SIB; and the configuration information includes at least one of pieces of bitmap information corresponding to the three CILs configured by management equipment of the communication system. The bitmap information is 10101. After receiving the bitmap information 10101, the CI MTC UE determines that the three CILs configured by the system are CIL0, CIL2 and CIL4, wherein a value interval of a CIT value corresponding to CIL0 is 0dB<CIT<=3dB, a value interval of a CIT value corresponding to CIL2 is 3dB<CIT<=9dB and a value interval of a CIT value corresponding to CIL4 is 9dB<CIT<=15dB. The CI MTC UE queries Table 4 to determine that repeat times of PRACH preambles are $N_{CIL0}^{preamble}$, $N_{CIL2}^{preamble}$ and $N_{CIL4}^{preamble}$ respectively.

In the example, the first type of levels correspond to CI information; the first type of levels correspond to the bitmap information; and the first type of information is the information in Table 4.

In addition, the eNB may configure multiple solutions about repeat times for a physical channel in advance, and for example, for a PRACH preamble, as shown in Table 5, the eNB configures two solutions about repeat times (Type0 and Type1) for the PRACH preamble in advance. The eNB indicates through 1 bit, in the configuration information of the random access channel sent in the SIB, the configured solutions about repeat times for the PRACH preamble, and for example, 0 represents Type0 and 1 represents Type1.

Table 5

| CIL index | M-CIT | PRACH preamble repeat times, Type0 | PRACH preamble repeat times, Type1 |
|---|---|---|---|
| 0 | 3dB | $N_{CIL0}^{preamble,Type0}$ | $N_{CIL0}^{preamble,Type1}$ |
| 1 | 6dB | $N_{CIL1}^{preamble,Type0}$ | $N_{CIL1}^{preamble,Type1}$ |
| 2 | 9dB | $N_{CIL2}^{preamble,Type0}$ | $N_{CIL2}^{preamble,Type1}$ |
| 3 | 12dB | $N_{CIL3}^{preamble,Type0}$ | $N_{CIL3}^{preamble,Type1}$ |
| 4 | 15dB | $N_{CIL4}^{preamble,Type0}$ | $N_{CIL4}^{preamble,Type1}$ |

Example 5

There exist MTC UEs in an LTE system, and the MTC UEs are divided into normal MTC UEs and CI MTC UEs. At most three CILs are configured in the communication system, and Table 6 and Table 7 are mapping tables between CILs and CITs in case of two CILs and three CILs.

Table 6

| CIL index | CIT |
|---|---|
| 0 | 0dB<CIT<=7.5dB |
| 1 | 7.5dB<CIT<=15dB |

Table 7

| CIL index | CIT |
|---|---|
| 0 | 0dB<CIT<=5dB |
| 1 | 5dB<CIT<=10dB |
| 2 | 10dB<CIT<=15dB |

An eNB sends configuration information of a random access channel in an SIB, wherein the configuration information includes amount information of the CILs. In the embodiment, the number of the CILs is 3, and then the CI MTC UE learns that the mapping table between the CILs and the CITs is Table 7.

In the example, the first type of levels correspond to the CILs; the configuration information of the first type of levels is the level amount of the CILs; and the first type of information is the information in Table 6 or Table 7.

The CI MTC UE is divided into the three CILs according to positions of CIT values to be supported by the CI MTC UE in value intervals in Table 7. For example, the CI MTC UE measures a reference signal sent by the eNB, and determines the CIL selected by the CI MTC UE according to a measurement result and a mapping table, preconfigured by the eNB, between a measurement result and a CIL.

Here, the reference signal may be at least one of:

a CRS, a DM-RS, a PSS, an SSS and a signal sent by a PBCH.

Here, the measurement result may be at least one of:

Reference Signal Receive Power (RSRP);
Reference Signal Receive Quality (RSRQ);
Receive Signal Strength Indicator (RSSI);
a path loss value between a UE and an eNB; and a received Signal to Noise Ratio of the downlink reference signal.

In the example, the reference signal is a Cell-Specific Reference Signal (CRS), and the measurement result is RSRP.

In the embodiment, the eNB configures a mapping table between RSRP and the CILs in advance, i.e. Table 8, wherein $RSRP_{measure}$ is an RSRP measured value, and $RSRP_{\min}^{CIL0}$ and $RSRP_{\max}^{CIL0}$ are a minimum value and a maximum value of a value interval of CIL0; $RSRP_{\min}^{CIL1}$ and $RSRP_{\max}^{CIL1}$ are a minimum value and a maximum value of a value interval of CIL1; and $RSRP_{\min}^{CIL2}$ and $RSRP_{\max}^{CIL2}$ are a minimum value and a maximum value of a value interval of CIL2. $RSRP_{\min}^{CIL0}$, $RSRP_{\max}^{CIL0}$, $RSRP_{\min}^{CIL1}$, $RSRP_{\max}^{CIL1}$, $RSRP_{\min}^{CIL2}$ and $RSRP_{\max}^{CIL2}$ are predefined or sent to the CI MTC UE by the eNB through a downlink channel.

Table 8

| Value range of RSRP | CIL index |
|---|---|
| $RSRP_{\min}^{CIL0} < RSRP_{measure} \leqslant RSRP_{\max}^{CIL0}$ | 0 |
| $RSRP_{\min}^{CIL1} < RSRP_{measure} \leqslant RSRP_{\max}^{CIL1}$ | 1 |
| $RSRP_{\min}^{CIL2} < RSRP_{measure} \leqslant RSRP_{\max}^{CIL2}$ | 2 |

In the example, the eNB configures a mapping table between PRACH preamble repeat times and the CILs in advance, i.e. Table 9. The repeat times of a PRACH preamble corresponding to CIL0 is $N_{CIL0}^{preamble}$; repeat times of a PRACH preamble corresponding to CIL1 is $N_{CIL1}^{preamble}$; and repeat times of a PRACH preamble corresponding to CIL2 is $N_{CIL2}^{preamble}$.

Table 9

| CIL index | PRACH preamble repeat times |
|---|---|
| 0 | $N_{CIL0}^{preamble}$ |
| 1 | $N_{CIL1}^{preamble}$ |
| 2 | $N_{CIL2}^{preamble}$ |

In the example, the eNB configures a mapping table between PDCCH repeat times and the CILs in advance, i.e. Table 10. The repeat times of a PDCCH corresponding to CIL0 is $N_{CIL0}^{PDCCH}$; repeat times of a PDCCH corresponding to CIL1 is $N_{CIL1}^{PDCCH}$; and repeat times of a PDCCH corresponding to CIL2 is $N_{CIL2}^{PDCCH}$.

Table 10

| CIL index | PDCCH repeat times |
|---|---|
| 0 | $N_{CIL0}^{PDCCH}$ |
| 1 | $N_{CIL1}^{PDCCH}$ |
| 2 | $N_{CIL2}^{PDCCH}$ |

In the example, the eNB configures a mapping table between repeat times of a PDSCH and CILs in advance, i.e. Table 11. Repeat times of a PDSCH corresponding to CIL0 is $N_{CIL0}^{PDSCH}$; repeat times of a PDSCH corresponding to CIL1 is $N_{CIL1}^{PDSCH}$; and repeat times of a PDSCH corresponding to CIL2 is $N_{CIL2}^{PDSCH}$.

Table 11

| CIL index | PDSCH repeat times |
|---|---|
| 0 | $N_{CIL0}^{PDSCH}$ |
| 1 | $N_{CIL1}^{PDSCH}$ |
| 2 | $N_{CIL2}^{PDSCH}$ |

In the example, the eNB configures a mapping table between PUCCH repeat times and CILs in advance, i.e. Table 12. Repeat times of a PUCCH corresponding to CIL0 is $N_{CIL0}^{PUCCH}$; repeat times of a PUCCH corresponding to CIL1 is $N_{CIL1}^{PUCCH}$; and repeat times of a PUCCH corresponding to CIL2 is $N_{CIL2}^{PUCCH}$.

Table 12

| CIL index | PUCCH repeat times |
|---|---|
| 0 | $N_{CIL0}^{PUCCH}$ |
| 1 | $N_{CIL1}^{PUCCH}$ |
| 2 | $N_{CIL2}^{PUCCH}$ |

In the example, the eNB configures a mapping table between PUSCH repeat times and the CILs in advance, i.e. Table 13. The repeat times of a PUSCH corresponding to CIL0 is $N_{CIL0}^{PUSCH}$; repeat times of a PUSCH corresponding to CIL1 is $N_{CIL1}^{PUSCH}$; and repeat times of a PUSCH corresponding to CIL2 is $N_{CIL2}^{PUSCH}$.

Table 13

| CIL index | PUSCH repeat times |
|-----------|--------------------|
| 0 | $N_{CIL0}^{PUSCH}$ |
| 1 | $N_{CIL1}^{PUSCH}$ |
| 2 | $N_{CIL2}^{PUSCH}$ |

In the example, UE1 is a CI MTC UE, UE1 measures an RSRP value of the CRS to be $RSRP_{measure}$, $RSRP_{measure}$ is between $RSRP_{min}^{CIL0}$ and $RSRP_{max}^{CIL0}$, and then a CIL index of UE1 is CIL index 0. According to CIL index 0, UE1 may learn from Table 4 to Table 8 that repeat times of the PRACH preamble is $N_{CIL0}^{preamble}$, repeat times of the PDCCH is $N_{CIL0}^{PDCCH}$, repeat times of the PDSCH is $N_{CIL0}^{PDSCH}$, repeat times of the PUCCH is $N_{CIL0}^{PUCCH}$ and repeat times of the PUSCH is $N_{CIL0}^{PUSCH}$.

In the example, the eNB may send different pieces of amount information of the CILs in the SIB every time.

In addition, the eNB may configure multiple solutions about repeat times for a physical channel in advance, and for example, for a PRACH preamble, as shown in Table 14, the eNB configures two solutions about repeat times (Type0 and Type1) for the PRACH preamble in advance. The eNB indicates, through 1 bit in the configuration information of the random access channel sent in the SIB, the configured solutions about repeat times for the PRACH preamble, and for example, 0 represents Type0 and 1 represents Type1.

Table 14

| CIL index | PRACH preamble repeat times, Type0 | PRACH preamble repeat times, Type1 |
|-----------|-----------------------------------|-----------------------------------|
| 0 | $N_{CIL0}^{preamble,Type0}$ | $N_{CIL0}^{preamble,Type1}$ |
| 1 | $N_{CIL1}^{preamble,Type0}$ | $N_{CIL1}^{preamble,Type1}$ |
| 2 | $N_{CIL2}^{preamble,Type0}$ | $N_{CIL2}^{preamble,Type1}$ |

Beside the example, the eNB may configure multiple solutions about repeat times s for a physical channel in advance, and for example, for a PRACH preamble, as shown in Table 15 and Table 16, the eNB configures two solutions about repeat times (Type0 and Type1) for the PRACH preamble and a PDCCH in advance. The eNB indicates, through 1bit in the configuration information of the random access channel sent in the SIB, the configured solutions about repeat times, and for example, 0 represents Type0 and 1 represents Type1.

Table 15

| CIL index | PRACH preamble repeat times, Type0 | PRACH preamble repeat times, Type1 |
|-----------|-----------------------------------|-----------------------------------|
| 0 | $N_{CIL0}^{preamble,Type0}$ | $N_{CIL0}^{preamble,Type1}$ |
| 1 | $N_{CIL1}^{preamble,Type0}$ | $N_{CIL1}^{preamble,Type1}$ |
| 2 | $N_{CIL2}^{preamble,Type0}$ | $N_{CIL2}^{preamble,Type1}$ |

Table 16

| CIL index | PDCCH repeat times, Type0 | PDCCH repeat times, Type1 |
|---|---|---|
| 0 | $N_{CIL0}^{PDCCH,Type0}$ | $N_{CIL0}^{PDCCH,Type1}$ |
| 1 | $N_{CIL1}^{PDCCH,Type0}$ | $N_{CIL1}^{PDCCH,Type1}$ |
| 2 | $N_{CIL2}^{PDCCH,Type0}$ | $N_{CIL2}^{PDCCH,Type1}$ |

Besides the example, the mapping tables between the CILs and the CITs in case of two CILs and three CILs may also be shown in Table 17 and Table 18, and the value intervals of the CIT values corresponding to two adjacent CILs are intersected.

Table 17

| CIL index | CIT |
|---|---|
| 0 | 0dB<CIT<=9dB |
| 1 | 6dB<CIT<=15dB |

Table 18

| CIL index | CIT |
|---|---|
| 0 | 0dB<CIT<=6dB |
| 1 | 4dB<CIT<=11dB |
| 2 | 9dB<CIT<=15dB |

Example 6

There exist MTC UEs in an LTE system, and the MTC UEs are divided into normal MTC UEs and CI MTC UEs. At most three CILs are configured in the communication system, and Table 19 and Table 20 are mapping tables between CILs and CITs in case of two CILs and three CILs.

Table 19

| CIL index | CIT |
|---|---|
| 0 | 0dB<CIT<=7.5dB |
| 1 | 7.5dB<CIT<=15dB |

Table 20

| CIL index | CIT |
|---|---|
| 0 | 0dB<CIT<=5dB |
| 1 | 5dB<CIT<=10dB |
| 2 | 10dB<CIT<=15dB |

An eNB sends configuration information of a random access channel in an SIB, wherein the configuration information includes amount information of the CILs. In the example, if the number of the CILs is 3, then the CI MTC UE learns that the mapping table between the CILs and the CITs is Table 20.

The eNB may configure multiple solutions about repeat times for a physical channel in advance, and for example, for a PRACH preamble, as shown in Table 21, the eNB configures four solutions about repeat times (Type0, Type1, Type2 and Type3) for the PRACH preamble in advance. The eNB indicates, through 2bits in the configuration information of the random access channel sent in the SIB, the configured solutions about repeat times for the PRACH preamble, and for example, 00 represents Type0, 01 represents Type1, 10 represents Type2 and 11 represents Type3.

Table 21

| CIL index | PRACH preamble repeat times, Type0 | PRACH preamble repeat times, Type1 | PRACH preamble repeat times, Type2 | PRACH preamble repeat times, Type3 |
| --- | --- | --- | --- | --- |
| 0 | 2 | 4 | 8 | 16 |
| 1 | 10 | 20 | 30 | 40 |
| 2 | 50 | 80 | 100 | 150 |

Example 7

There exist Legacy UEs and MTC UEs in an LTE system, and the MTC UEs are divided into normal MTC UEs and CI MTC UEs. At most three CILs are configured in the communication system, and Table 22 and Table 23 are mapping tables between CILs and CITs in case of two CILs and three CILs.

Table 22

| CIL index | CIT |
| --- | --- |
| 0 | 0dB<CIT<=7.5dB |
| 1 | 7.5dB<CIT<=15dB |

Table 23

| CIL index | CIT |
| --- | --- |
| 0 | 0dB<CIT<=5dB |
| 1 | 5dB<CIT<=10dB |
| 2 | 10dB<CIT<=15dB |

An eNB sends configuration information of a random access channel in an SIB, wherein the configuration information includes amount information of the CILs. In the example, if the number of the CILs is 3, then the CI MTC UE learns that the mapping table between the CILs and the CITs is Table 23.

The eNB configures multiple mapping solutions about repeat times for a physical channel in advance, and for example, for a PRACH preamble, as shown in Table 24, repeat times of a PRACH preamble corresponding to CIL0 is 2; repeat times of a PRACH preamble corresponding to CIL1 is 10; and repeat times of a PRACH preamble corresponding to CIL2 is 50.

Table 24

| CIL index | PRACH preamble repeat times |
| --- | --- |
| 0 | 2 |
| 1 | 10 |
| 2 | 50 |

The configuration information of the random access channel further includes random access channel resources allocated to the CI MTC UE; and

when time-domain and frequency-domain random access channel resources allocated to the CI MTC UE are the same as time-domain and frequency-domain random access channel resources allocated to the Legacy UE, a manner of allocating different random access sequences is adopted for distinguishing them.

In the example, it is predefined that: when the number of the random access sequences allocated to the CI MTC UE is smaller than 10 and the number of the CILs is 3, random access channel resources of each CIL are divided in a TDM and/or FDM manner.

In the example, in a situation that 6 random access sequences are allocated to the CI MTC UE and the number of the CILs is 3, the random access channel resources of each CIL may be divided in the TDM and/or FDM manner.

Example 8

There exist Legacy UEs and MTC UEs in an LTE system, and the MTC UEs are divided into normal MTC UEs and CI MTC UEs. At most three CILs are configured in the communication system, and Table 25 and Table 26 are mapping tables between CILs and CITs in case of two CILs and three CILs.

Table 25

| CIL index | CIT |
|---|---|
| 0 | 0dB<CIT<=7.5dB |
| 1 | 7.5dB<CIT<=15dB |

Table 26

| CIL index | CIT |
|---|---|
| 0 | OdB<CIT<=5dB |
| 1 | 5dB<CIT<=10dB |
| 2 | 10dB<CIT<=15dB |

An eNB sends configuration information of a random access channel in an SIB, wherein the configuration information includes amount information of the CILs. In the example, if the number of the CILs is 3, then the CI MTC UE learns that the mapping table between the CILs and the CITs is Table 26.

The eNB configures multiple mapping solutions about repeat times for a physical channel in advance, and for example, for a PRACH preamble, as shown in Table 27, repeat times of a PRACH preamble corresponding to CIL0 is 2; repeat times of a PRACH preamble corresponding to CIL1 is 10; and repeat times of a PRACH preamble corresponding to CIL2 is 50.

Table 27

| CIL index | PRACH preamble repeat times |
|---|---|
| 0 | 2 |
| 1 | 10 |
| 2 | 50 |

The configuration information of the random access channel further includes random access channel resources allocated to the CI MTC UE; and

time-domain and frequency-domain random access channel resources allocated to the CI MTC UE are different from time-domain and frequency-domain random access channel resources allocated to the Legacy UE, and random access channel resources of each CIL are further divided in a Code Division Multiplexing (CDM) manner, that is, different random access sequences are allocated to different CILs, and the same number of random access sequences are allocated to each CIL.

Besides the example, the time-domain and frequency-domain random access channel resources allocated to the CI MTC UE are different from time-domain and frequency-domain random access channel resources allocated to the Legacy UE, and the random access channel resources of each CIL are further divided in the CDM manner, that is, different random access sequences are allocated to different CILs, and the number of random access sequences allocated to each CIL may also be configured, a configuration principle being one of that:

the number of random access sequences allocated to each CIL is allocated according to the number of MTC UEs corresponding to different CILs;

the higher a CIL is, the less the random access sequences allocated to the MTC UE with the higher CIL are;

the higher a CIL is, the more the random access sequences allocated to the MTC UE with the higher CIL are; and

the numbers of chances for the MTC UEs corresponding to different CILs to send random access sequences within the same time period are ensured to be the same or at the same order of magnitude.

Example 9

There exist Legacy UEs and MTC UEs in an LTE system, and the MTC UEs are divided into normal MTC UEs and CI MTC UEs. At most three CILs are configured in the communication system, and Table 28~Table 30 are mapping tables between CILs and CITs in case of different numbers of CILs respectively.

Table 28

| CIL index | CIT |
|---|---|
| 0 | OdB<CIT<=15dB |

Table 29

| CIL index | CIT |
|---|---|
| 0 | OdB<CIT<=7.5dB |
| 1 | 7.5dB<CIT<=l5dB |

Table 30

| CIL index | CIT |
|---|---|
| 0 | 0dB<CIT<=5dB |
| 1 | 5dB<CIT<=10dB |
| 2 | 10dB<CIT<=15dB |

An eNB sends configuration information of a random access channel in an SIB, wherein the configuration information includes information about the amount of the CILs. In the example, the number of the CILs is 3, and then the CI MTC UE learns that the mapping table between the CILs and the CITs is Table 30.

The eNB configures multiple mapping solutions about repeat times for a physical channel in advance, and for example, for a PRACH preamble, as shown in Table 31, repeat times of a PRACH preamble corresponding to CIL0 is 2; repeat times of a PRACH preamble corresponding to CIL1 is 10; and repeat times of a PRACH preamble corresponding to CIL2 is 50.

Table 31

| CIL index | PRACH preamble repeat times |
|---|---|
| 0 | 2 |
| 1 | 10 |
| 2 | 50 |

The configuration information of the random access channel further includes random access channel resources allocated to the CI MTC UE; and
time-domain and frequency-domain random access channel resources allocated to the CI MTC UE are different from time-domain and frequency-domain random access channel resources allocated to the Legacy UE, and random access channel resources of each CIL are further divided in a CDM manner, that is, different random access sequences are allocated to different CILs, and the number of random access sequences allocated to each CIL may also be configured, a configuration principle being as follows:

the number of random access sequences allocated to each CIL are allocated according to the number of MTC UEs corresponding to different CILs.

In the example, the number of the CILs is 3, and a proportional relationship among the numbers of random access sequences allocated to CIL0, CIL1 and CIL2 may be A0:A1:A2, wherein values of A are configured by the system or configured by the eNB;

besides the example, the values of A are determined at least by the size of a value range of CIT values;

besides the example, the values of A are determined at least by the size of a value range of received signal quality of a predefined reference signal corresponding to the CILs; and

the predefined reference signal is at least one of:

a CRS, a DM-RS, a PSS, an SSS and a signal sent by a PBCH.

The received signal quality of the predefined reference signal refers to one of:

RSRP, RSRQ, an RSSI, a received signal to noise ratio of the reference signal, a path loss value between a target UE and an eNB, and retransmission times of the predefined reference signal under the condition of successful reception of the predefined reference signal.

The value range of the received signal quality of the predefined reference signal refers to one of:

a value range of a measured value of the received signal quality of the predefined reference signal; and

a value range of a difference between the measured value of the received signal quality of the predefined reference signal and a reference value of the received signal quality of the predefined reference signal, or a value range of an absolute value of the difference, wherein the value range refers to a maximum value of the values or a minimum value of the values, or a value interval,

wherein the reference value of the received signal quality of the predefined reference signal is sent to the target UE by the eNB,
wherein the reference value of the received signal quality of the predefined reference signal is configured in the configuration information of the random access channel.

Example 10

There exist Legacy UEs and MTC UEs in an LTE system, and the MTC UEs are divided into normal MTC UEs and CI MTC UEs. At most three CILs are configured in the communication system, and Table 32~Table 34 are mapping tables between CILs and CITs in case of different numbers of CILs respectively. When multiple CILs are configured, the size of a value range of CIT values corresponding to each CIL is decreased along with increase of the CILs.

Table 32

| CIL index | CIT |
|---|---|
| 0 | 0dB<CIT<=15dB |

Table 33

| CIL index | CIT |
|-----------|-----|
| 0 | 0dB<CIT<=10dB |
| 1 | 10dB<CIT<=15dB |

Table 34

| CIL index | CIT |
|-----------|-----|
| 0 | 0dB<CIT<=9dB |
| 1 | 9dB<CIT<=12dB |
| 2 | 12dB<CIT<=15dB |

An eNB sends configuration information of a random access channel in an SIB, wherein the configuration information includes amount information of the CILs. In the example, the number of the CILs is 3, and then the CI MTC UE learns that the mapping table between the CILs and the CITs is Table 34.

The eNB configures multiple mapping solutions about repeat times for a physical channel in advance, and for example, for a PRACH preamble, as shown in Table 35, repeat times of a PRACH preamble corresponding to CIL0 is 10; repeat times of a PRACH preamble corresponding to CIL1 is 30; and repeat times of a PRACH preamble corresponding to CIL2 is 50.

Table 35

| CIL index | PRACH preamble repeat times |
|-----------|-----------------------------|
| 0 | 10 |
| 1 | 30 |
| 2 | 50 |

The configuration information of the random access channel further includes random access channel resources allocated to the CI MTC UE; and time-domain and frequency-domain random access channel resources allocated to the CI MTC UE are different from time-domain and frequency-domain random access channel resources allocated to the Legacy UE, and random access channel resources of each CIL are further divided in a CDM manner, that is, different random access sequences are allocated to different CILs, and the same number of random access sequences are allocated to each CIL.

Besides the example, when multiple CILs are configured, the size of the value range of the CIT values corresponding to each CIL is decreased along with increase of the CIL, and the value ranges of the CIT values corresponding to adjacent CILs may be intersected, as shown in Table 36.

Table 36

| CIL index | CIT |
|-----------|-----|
| 0 | 0dB<CIT<=10dB |
| 1 | 8dB<CIT<=13dB |
| 2 | 12dB<CIT<=15dB |

When a CIT value measured by the MTC UE falls in the intersection, the MTC UE independently selects a corresponding CIL, or the MTC UE selects a corresponding CIL according to a predefined principle.

The above are only embodiments of the present disclosure and not intended to limit the scope of protection of the present disclosure. All modifications made according to a principle of the present disclosure shall be understood to fall within the scope of protection of the present disclosure.

**Claims**

1. A method for transmitting configuration information of a random access channel, comprising:

   transmitting configuration information of a random access channel, the configuration information of the random access channel comprising configuration information of a first type of levels.

2. The method according to claim 1, wherein the first type of levels comprises a Coverage Improvement Level (CIL) and/or a physical channel repeat level.

3. The method according to claim 2, wherein a physical channel corresponding to the physical channel repeat level comprises at least one of:

   a Physical Random Access Channel (PRACH), a Physical Broadcast Channel (PBCH), a Physical Downlink Control Channel (PDCCH), an Enhanced PDCCH (EPDCCH), a Physical Downlink Shared Channel (PDSCH), a Physical Uplink Control Channel (PUCCH) and a Physical Uplink Shared Channel (PUSCH).

4. The method according to claim 3, wherein the physical channel repeat level comprises a repeat level of at least one of:

   a Master Information Block (MIB), System Information Block (SIB), Downlink Control Information (DCI), a downlink transmission block, an uplink transmission block, Message1 (Msg1), a Random Access Response (RAR) message, Msg3 and Msg4 born on the physical channel.

5. The method according to claim 1, wherein the configuration information of the random access channel is configured in the SIB or the DCI by a first type of node or management equipment of the first type of node.

6. The method according to claim 5, wherein
   the SIB is sent through a PDSCH; and
   the DCI is sent through a PDCCH or an EPDCCH.

7. The method according to any one of claims 1 to 6, wherein the configuration information of the first type of levels comprises at least one of:

   bitmap information, index information of the first type of levels configured by the first type of node, information about repeat times of the physical channel corresponding to the first type of levels, predefined level amount of the first type of levels, configured level amount of the first type of levels, a configured highest level of the first type of levels and a configured lowest level of the first type of levels.

8. The method according to claim 7, wherein the configuration information of the first type of levels has a mapping relationship with a first type of information, and the mapping relationship is configured in a second type of node by communication system equipment or sent to the second type of node by the first type of node.

9. The method according to claim 7, wherein the first type of information comprises at least one of:

   the number of the levels of the first type,
   configured number N1 of the first type of levels, wherein N1 is a positive integer;
   index information of the N1 levels in the first type of levels;
   predefined number N2 of the first type of levels, wherein N2 is a positive integer;
   a value range of received signal quality of a predefined reference signal corresponding to the first type of levels;
   a value range of Coverage Improvement Target (CIT) values corresponding to the first type of levels, wherein the value range is a maximum value, a minimum value, a specific value or a value interval;
   a retransmission level of the physical channel corresponding to the first type of levels; and
   a value range of repeat times of the physical channel corresponding to the first type of levels, wherein the value ranges are specific values or value intervals.

10. The method according to claim 9, wherein the repeat times of the physical channel corresponding to the first type of levels is a predefined value, wherein the predefined value is a positive integer.

**11.** The method according to claim 10, wherein the N1 levels of the first type are extracted from N2 predefined levels of the first type, and N2 is a positive integer larger than or equal to N1.

**12.** The method according to claim 9, wherein the configuration information of the first type of levels further comprises solution indication information about repeat times of the physical channel,
wherein the solution indication information about repeat times of the physical channel is configured to indicate to select one solution from multiple predefined solutions about the value range of repeat times of the physical channel corresponding to the first type of levels.

**13.** The method according to claim 9, wherein the predefined reference signal comprises at least one of:

a Cell-Specific Reference Signal (CRS), a Demodulation Reference Signal (DM-RS), a Primary Synchronization Signal (PSS), a Secondary Synchronization Signal (SSS), and a signal sent by a PBCH.

**14.** The method according to claim 13, wherein the received signal quality of the predefined reference signal comprises at least one of:

Reference Signal Receive Power (RSRP), Reference Signal Receive Quality (RSRQ), a Received Signal Strength Indicator (RSSI), a received signal to noise ratio of the reference signal, a path loss value between the second type of node and the first type of node, and retransmission times of the predefined reference signal under a condition of successful reception of the predefined reference signal.

**15.** The method according to claim 14, wherein the value range of the received signal quality of the predefined reference signal comprises at least one of:

a value range of a measured value of the received signal quality of the predefined reference signal; and
a value range of a difference between the measured value of the received signal quality of the predefined reference signal and a reference value of the received signal quality of the predefined reference signal or a value range of an absolute value of the difference,

wherein the value range refers to a maximum value, or a minimum value, or a specific value, or a value interval.

**16.** The method according to claim 15, wherein the reference value of the received signal quality of the predefined reference signal is sent to the second type of node by the first type of node.

**17.** The method according to claim 16, wherein the reference value of the received signal quality of the predefined reference signal is configured in the configuration information of the random access channel.

**18.** The method according to claim 15, wherein value intervals of the received signal quality of the predefined reference signal corresponding to different levels in the first type of levels correspond to a same range;
or
ranges corresponding to the value intervals of the received signal quality of the predefined reference signal corresponding to different levels in the first type of levels are decreased along with increase of levels in the first type of levels;
wherein the ranges corresponding to the value intervals of the received signal quality of the predefined reference signal corresponding to different levels in the first type of levels are configured in an SIB by the first type of node.

**19.** The method according to claim 9, wherein the value ranges, corresponding to different levels in the first type of levels, of the received signal quality of the predefined reference signal are not intersected or are partially intersected.

**20.** The method according to claim 19, wherein, when the received signal quality of the predefined reference signal measured by the second type of node is in an intersection of value ranges corresponding to different levels, the second type of node selects a corresponding level from the first type of levels randomly or according to a predefined principle.

**21.** The method according to claim 9, wherein value ranges of CIT values corresponding to different levels in the first type of levels are not intersected or are partially intersected.

**22.** The method according to claim 21, wherein, when a CIT value measured by the second type of node is in an intersection of value ranges corresponding to different levels, the second type of node selects a corresponding level from the first type of levels randomly or according to a predefined principle.

23. The method according to claim 9, wherein value intervals of CIT values corresponding to different levels in the first type of levels correspond to a same value range;
or,
sizes of value ranges corresponding to value intervals of CIT values corresponding to different levels in the first type of levels are decreased along with increase of the levels in the first type of levels;
wherein the ranges corresponding to the value intervals of the CIT values corresponding to different levels in the first type of levels are configured in an SIB by the first type of node.

24. The method according to any one of claims 1 to 4, wherein transmitting the configuration information of the random access channel comprises:

    periodically transmitting the configuration information of the random access channel,
    or
    transmitting the configuration information of the random access channel under triggering according to a predefined condition.

25. The method according to claim 9, wherein the configuration information of the random access channel further comprises random access channel resources allocated to the second type of node.

26. The method according to claim 25, wherein the random access channel resources allocated to the second type of node comprise at least one of:

    time-domain resources, frequency-domain resources, and available random access sequences.

27. The method according to claim 26, further comprising:

    determining a multiplexing manner for random access channel resources allocated by each of the levels of the first type at least according to the number of the levels of the first type and the random access channel resources allocated to the second type of node.

28. The method according to claim 26, wherein, when random access channel resources allocated by each of different levels in the first type of levels are distinguished by available random access sequences, the number of random access sequences allocated by each of the levels of the first type is directly proportional to the number of the second type of nodes corresponding to each level in the first type of levels.

29. The method according to claim 26, wherein, when random access channel resources allocated by each of different levels in the first type of levels are distinguished by available random access sequences, the number of random access sequences allocated by each of different levels in the first type of levels is the same, and the allocated random access sequences are different.

30. The method according to claim 26, wherein the number of random access sequences allocated by different levels in the first type of levels allocated by different levels in the first type of levels is increased along with increase of levels in the first type of levels.

31. The method according to claim 26, wherein, when random access channel resources allocated by each level in the first type of levels are distinguished by available random access sequences, the number of random access sequences allocated by each level in the first type of levels is configured by the first type of node.

32. The method according to claim 26, wherein, when random access channel resources allocated by each level in the first type of levels are distinguished by available random access sequences, the number of random access sequences allocated by each level in the first type of levels is configured by the first type of node.

33. The method according to claim 26, wherein the configuration information of the random access channel further comprises: random access channel resources allocated to the second type of node, the random access channel resources being allocated according to a predefined resource allocation strategy;

the predefined resource allocation strategy comprises a first strategy and a second strategy;

the first strategy is one of that: the number of the available random access sequences is smaller than a first predefined value; the number of the available random access sequences is larger than a second predefined value; and the number of the available random access sequences is larger than the first predefined value and smaller than the second predefined value; the first predefined value is smaller than the second predefined value;

the second strategy is one of that: the number of the available random access sequences is larger than a third predefined value; the number of the available random access sequences is smaller than a fourth predefined value; and that the number of the available random access sequences is smaller than the third predefined value and larger than the fourth predefined value; the third predefined value is larger than the second predefined value;

when the first strategy is met, each level in the first type of levels multiplexes a same frequency-domain resource in a Time Division Multiplexing (TDM) manner or multiplexes a same time-domain resource in a Frequency Division Multiplexing (FDM) manner; and

when the second strategy is met, the random access channel resources allocated by each level in the first type of levels occupy the same time-domain resources and/or frequency-domain resources, and the random access channel resources allocated by each level in the first type of levels comprise different random access sequences,

wherein the first predefined value, the second predefined value, the third predefined value and the fourth predefined value are configured and transmitted to the second type of node by communication system equipment, or are configured and sent to the second type of node by the first type of node.

34. The method according to claim 28, wherein a proportion of the numbers of random access sequences allocated by two levels in the first type of levels is consistent with a preset proportional relationship $A^{m(i)}:A^{m(n)}$,

where i and n are indexes of the two levels in the first type of levels; and

$m(i)$ and $m(n)$ are power exponents corresponding to the two levels, corresponding to the indexes i and n, in the first type of levels, and A is a base number.

35. The method according to claim 34, wherein $A^{m(i)}$ and $A^{m(n)}$ are configured by communication system equipment according to a size of the value range of the received signal quality of the predefined reference signal corresponding to each level in the first type of levels and/or a size of a value range of a CIT value corresponding to each level in the first type of levels.

36. A method for acquiring configuration information of a random access channel, comprising:

receiving configuration information of a random access channel, the configuration information of the random access channel comprising configuration information of a first type of levels; and

searching for a first type of information in a pre-stored information table of the first type according to the configuration information of the first type of levels and a predefined rule.

37. A random access method, comprising:

transmitting, by a first type of node, configuration information of a random access channel, the configuration information of the random access channel comprising configuration information of a first type of levels;

receiving, by a second type of node, the configuration information of the random access channel;

searching for, by the second type of node, a first type of information from a pre-stored information table of the first type according to the configuration information of the first type of levels and a predefined rule; and

randomly accessing, by the second type of node, a radio network according to the first type of information.

38. A communication node, which is a first type of node, the first type of node comprising:

a first transmitting unit, configured to transmit configuration information of a random access channel, the configuration information of the random access channel comprising configuration information of a first type of levels.

39. A communication node, which is a second type of node, the second type of node comprising:

a receiving unit, configured to receive configuration information of a random access channel, the configuration information of the random access channel comprising configuration information of a first type of levels; and

a query unit, configured to search for a first type of information in a pre-stored information table of the first type according to the configuration information of the first type of levels and a predefined rule.

**40.** A communication system, comprising:

a first type of node, configured to transmit configuration information of a random access channel, the configuration information of the random access channel comprising configuration information of a first type of levels; and
a second type of node, configured to receive the configuration information of the random access channel, search for a first type of information in a pre-stored information table of the first type according to the configuration information of the first type of levels and a predefined rule and randomly access a radio network according to the first type of information.

**41.** A computer storage medium, having stored therein computer-executable instructions configured to execute at least one of the methods according to claims 1 to 37.

Fig. 1

| Configuration information of a random access channel is received, the configuration information of the random access channel including configuration information of a first type of levels | S110 |

↓

| A pre-stored information table of the first type is searched for a first type of information according to the configuration information of the first type of levels and a predefined rule | S120 |

Fig. 2

| First type of node | | Second type of node |

S210: configuration information of a random access channel is sent, the configuration information including configuration information of a first type of levels

S220: the configuration information of the random access channel is received

S240: random access is performed according to the first type of information

S230: a pre-stored information table of the first type is searched for a first type of information according to the configuration information of the first type of levels and a predefined rule

Fig. 3

110

receiving unit

120

query unit

Fig. 4

210

220

<table>
<tr><td colspan="2"><h1 style="text-align:center">INTERNATIONAL SEARCH REPORT</h1></td><td>International application No.<br>**PCT/CN2014/082840**</td></tr>
</table>

**A. CLASSIFICATION OF SUBJECT MATTER**

H04W 74/08 (2009.01) i

According to International Patent Classification (IPC) or to both national classification and IPC

**B. FIELDS SEARCHED**

Minimum documentation searched (classification system followed by classification symbols)

IPC: H04L    H04Q    H04W

Documentation searched other than minimum documentation to the extent that such documents are included in the fields searched

Electronic data base consulted during the international search (name of data base and, where practicable, search terms used)

CPRSABS; CNTXT; VEN; CNKI: PRACH, grade, random access channel, configur+, information, level, multiplex

**C. DOCUMENTS CONSIDERED TO BE RELEVANT**

| Category* | Citation of document, with indication, where appropriate, of the relevant passages | Relevant to claim No. |
|---|---|---|
| X | CN 101730258 A (SPREADTRUM COMMUNICATIONS (SHANGHAI) CO., LTD.), 09 June 2010 (09.06.2010), description, paragraphs [0015]-[0018] and [0073]-[0079] | 1-32 and 36-41 |
| A | CN 101730258 A (SPREADTRUM COMMUNICATIONS (SHANGHAI) CO., LTD.), 09 June 2010 (09.06.2010), the whole document | 33-35 |
| X | CN 102378389 A (ZTE CORP.), 14 March 2012 (14.03.2012), description, paragraphs [0056]-[0104] | 1-32 and 36-41 |
| A | CN 102378389 A (ZTE CORP.), 14 March 2012 (14.03.2012), the whole document | 33-35 |
| A | CN 101242669 A (ZTE CORP.), 13 August 2008 (13.08.2008), the whole document | 1-41 |

☐ Further documents are listed in the continuation of Box C.          ☒ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 20 October 2014 (20.10.2014) | **04 November 2014 (24.11.2014)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br>**YU, Ruifu**<br>Telephone No.: (86-10) **62089387** |
|---|---|

Form PCT/ISA/210 (second sheet) (July 2009)

EP 3 101 984 A1

# INTERNATIONAL SEARCH REPORT
Information on patent family members

International application No.

**PCT/CN2014/082840**

| Patent Documents referred in the Report | Publication Date | Patent Family | Publication Date |
|---|---|---|---|
| CN 101730258 A | 09 June 2010 | CN 101730258 B | 03 October 2012 |
| CN 102378389 A | 14 March 2012 | WO 2012022189 A1 | 23 February 2012 |
| CN 101242669 A | 13 August 2008 | CN 101242669 B | 16 January 2013 |

Form PCT/ISA/210 (patent family annex) (July 2009)